# EUROPÄISCHE PATENTANMELDUNG

(11) **EP 0 980 777 A2**
(43) Veröffentlichungstag der Anmeldung: **23.02.2000**
(21) Anmeldenummer: 99115345.3
(22) Anmeldetag: 03.08.1999
(51) Int. Cl.: B60J 7/00

(54) **Mehrteiliger Schiebehimmel für ein Schiebedachsystem eines Personenkraftwagens**

(30) Priorität: 19.08.1998 DE 19837503
(71) Anmelder: Bayerische Motoren Werke Aktiengesellschaft, 80809 München (DE)
(72) Erfinder: Minatti, Johann, 80935 München (DE); Schuster, Gerd, Dr., 85764 Oberschleissheim (DE)

(57) **Zusammenfassung**

Die Erfindung betrifft einen mehrteiligen Schiebehimmel (1) für ein Schiebedachsystem eines Fahrzeuges, insbesondere eines Personenkraftwagens, mit zumindest einem in Fahrzeuglängsrichtung (3) verschiebbaren Deckelteil (2) sowie mit zumindest zwei teleskopartig übereinander verschiebbaren, unterhalb des Deckelteiles (2) in seitlichen Führungsschienen (7a,b,c) geführten Schiebehimmel-Teilen (1a,b,c).

Erfindungsgemäß sind die den Schiebehimmel-Teilen (1a,b,c) zugeordneten Führungsschienen (7a,b,c) am Deckelteil (2) befestigt und zusammen mit diesem verschiebbar. Bevorzugt sind die Schiebehimmel-Teile (1a,b,c) quer zur Fahrzeuglängsrichtung (3) gewölbt und liegen unter Vorspannung stehend in deren sich in Fahrzeuglängsrichtung (3) erstreckenden Mittenbereich aufeinander auf.

## Beschreibung

Die Erfindung betrifft einen mehrteiligen Schiebehimmel für ein Schiebedachsystem eines Fahrzeuges, insbesondere eines Personenkraftwagens (PKW's), mit zumindest einem in Fahrzeuglängsrichtung verschiebbaren Deckelteil sowie mit zumindest zwei teleskopartig übereinander verschiebbaren, unterhalb des Deckelteiles in seitlichen Führungsschienen geführten Schiebehimmel-Teilen. Zum technischen Umfeld wird beispielshalber auf die DE 41 11 931 C1 verwiesen.

Üblicherweise sind die bekannten Schiebehimmel von PKW-Schiebedachsystemen in separaten bezüglich des Fahrzeuges seitlichen Führungsschienen geführt, die zumeist Bestandteil eines kompletten Schiebedachsystems sind, welches als Vormontageeinheit beim Fahrzeughersteller in den entsprechenden Dachausschnitt der Fahrzeugkarosserie eingebaut wird. Nach erfolgter Installation sind diese Führungsschienen für den unter einem insbesondere durchsichtigen Deckelteil, welches das eigentliche Schiebedach bildet, angeordneten Schiebehimmel in ihrer Lage zur Fahrzeugkarosserie im wesentlichen fest. Um den Dachausschnitt der Fahrzeugkarosserie vollständig freilegen zu können, ist es dabei erforderlich, daß sich die Schiebehimmel-Führungsschienen über den gesamten Bewegungsbereich des Deckelteiles erstrecken. Ein relativ großer Bauraumbedarf ist hiervon die Folge.

Mit der vorliegenden Erfindung wurde erkannt, daß insbesondere bei großflächigen Deckelteilen, denen ein mehrteiliger Schiebehimmel mit zumindest zwei teleskopartig übereinander verschiebbaren Schiebehimmel-Teilen zugeordnet ist, eine im Hinblick auf den Bauraum sowie den Bauaufwand deutlich vorteilhaftere Lösung möglich ist.
Diese Lösung ist dadurch gekennzeichnet, daß die den Schiebehimmel-Teilen zugeordneten Führungsschienen am Deckelteil befestigt und zusammen mit diesem verschiebbar sind. Vorteilhafte Aus- und Weiterbildungen sind Inhalt der Unteransprüche.

Näher erläutert wird die Erfindung anhand eines bevorzugten Ausführungsbeispieles. Dabei zeigt
- **Figur 1**: einen Längsschnitt (in Richtung der Fahrzeuglängsachse) durch ein erfindungsgemäßes Schiebedachsystem bei geschlossenem Deckelteil sowie geschlossenem Schiebehimmel,
- **Figur 2**: diesen Längsschnitt nach **Figur 1** bei teilweise geöffnetem Schiebehimmel,
- **Figur 3**: den Längsschnitt nach **Figur 1** bei vollständig geöffnetem Schiebehimmel,
- **Figur 4**: einen vergrößerten Teil-Schnitt A-A aus **Figur 3**,
- **Figur 5**: einen Teil des Längsschnittes nach **Figur 1** bei vollständig geöffnetem Deckelteil, sowie
- **Figur 6**: den Längsschnitt nach **Figur 1**, wobei sich das Deckelteil in seiner geschlossenen Position befindet, während ein sich bei geschlossenem Deckelteil hinter demselben befindendes Fahrzeug-Anschlußteil hier nach vorne unter das Deckelteil verfahren ist.

Mit den Bezugsziffern 1a, 1b, 1c sind die drei Schiebehimmel-Teile eines in seiner Gesamtheit mit der Bezugsziffer 1 versehenen Schiebehimmels eines Fahrzeug-Schiebedachsystemes bezeichnet. Dieser Schiebehimmel 1 ist wie üblich unterhalb eines das eigentliche Schiebedach des Schiebedachsystemes bildenden Deckelteiles 2 angeordnet, das in Fahrzeuglängsrichtung 3 verschiebbar ist.

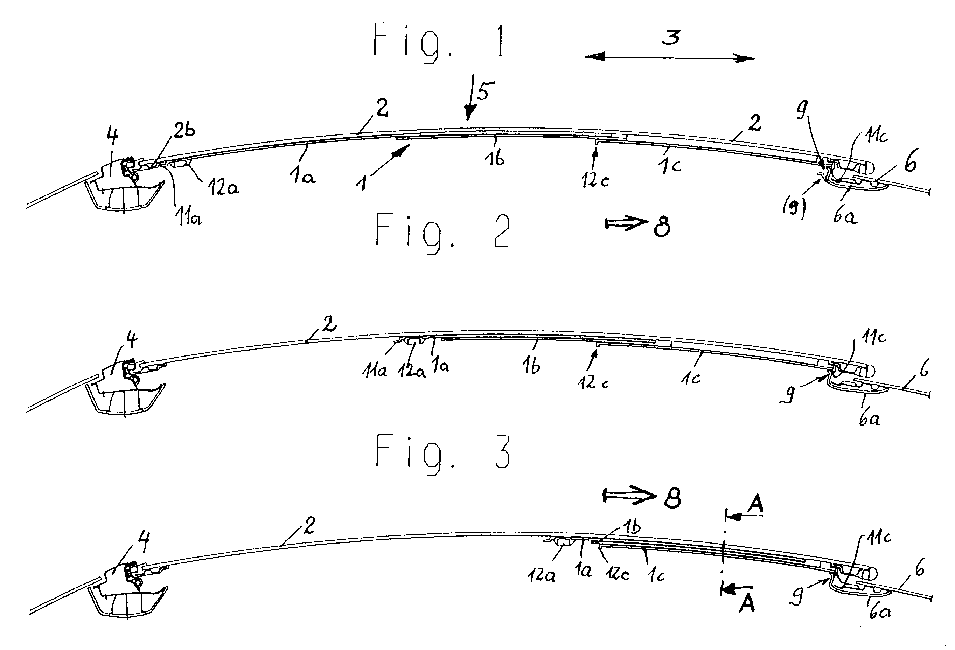

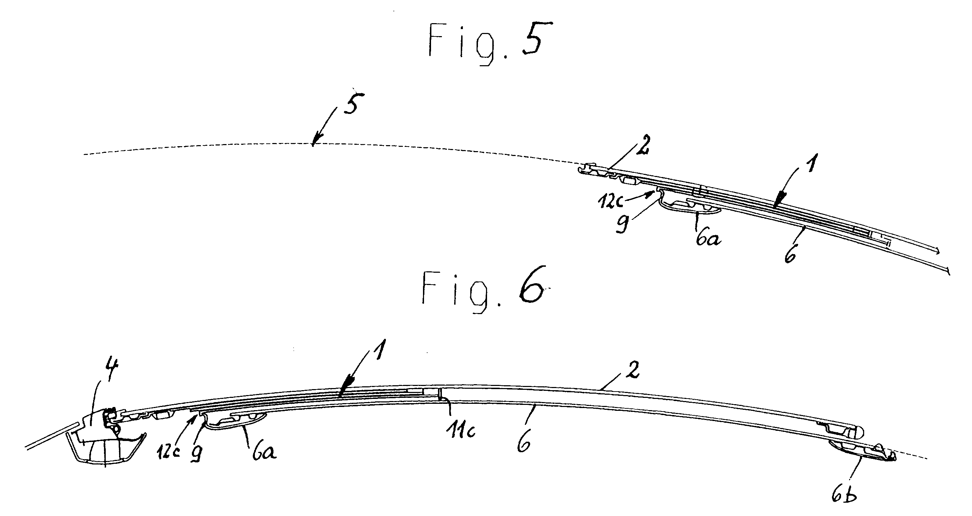

Nicht dargestellt ist das Fahrzeug bzw. der PKW, in welchem dieses Schiebedachsystem eingebaut ist, jedoch erkennt man in den **Figuren 1-3** sowie in **Figur 6** den vorderen, sich quer zur Fahrzeuglängsrichtung 3 erstreckenden Dachrahmen 4, der in Fahrzeug-Fahrtrichtung betrachtet den Dachausschnitt 5 (vgl. **Figuren 1, 5**), der vom Deckelteil 2 abdeckbar bzw. freilegbar ist, nach vorne hin begrenzt. In den **Figuren 1-3** sowie in **Figur 5** erkennt man ferner ein sich im geschlossenen Zustand des Deckelteiles 4 (vgl. **Figur 1**) in Fahrzeuglängsrichtung 3 betrachtet hinter diesem befindendes Fahrzeug-Anschlußteil 6. Allgemein kann es sich bei diesem Fahrzeug-Anschlußteil 6 um den hinteren Dachrahmen bzw. um den Heckscheibenrahmen des PKW's handeln. Beim hier erläuterten Ausführungsbeispiel ist dieses Fahrzeug-Anschlußteil 6 seinerseits in Fahrzeuglängsrichtung 3 verschiebbar und ist dabei in **Figur 6** in seiner nach vorne verschobenen Position dargestellt, worauf an späterer Stelle noch näher eingegangen wird.

In Fahrzeuglängsrichtung 3 verschiebbar geführt ist das Deckelteil 2 (und beim hier erläuterten Ausführungsbeispiel zusätzlich das Fahrzeug-Anschlußteil 6) wie üblich in bezüglich des PKW's seitlichen Führungsschienen, die hier nicht figürlich dargestellt sind, da sie wie üblich am seitlichen Dachrahmen der Fahrzeugkarosserie, der sich an den vorderen Dachrahmen 4 anschließt und dabei den Dachausschnitt 5 seitlich begrenzt, starr befestigt sind.

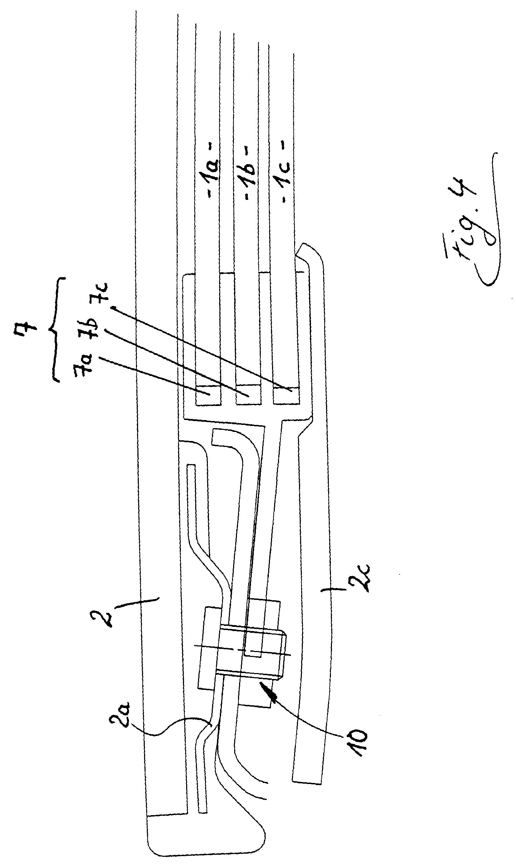

Auch die Schiebehimmel-Teile 1a, 1b, 1c sind in jeweils eigenen sich in Fahrzeuglängsrichtung 3 erstreckenden Führungsschienen 7a, 7b, 7c verschiebbar geführt, d.h. jedem Schiebehimmel-Teil 1a, 1b, 1c sind linksseitig sowie rechtsseitig desselben eigene Führungsschienen 7a, 7b, 7c zugeordnet. Dies geht aus der Darstellung in **Figur 4** hervor, welche den Schnitt A-A aus **Figur 3** für den bezüglich des PKW's linksseitigen Randbereich des beschriebenen Schiebedachsystemes zeigt, wobei sich in diesen beiden Darstellungen die drei Schiebehimmel-Teile 1a, 1b, 1c in ihrer teleskopartig übereinander geschobenen Position befinden. Bevor der entsprechende Bewegungsablauf zum Erreichen des Zustandes nach **Figur 3** (ausgehend vom Zustand nach **Figur 1**) erläutert wird, soll zunächst auf die bereits angedeutete **Figur 4** eingegangen werden:

In **Figur 4** erkennt man einen wesentlichen Aspekt der vorliegenden Erfindung, nämlich daß die Führungsschienen 7a, 7b, 7c des mehrteiligen Schiebehimmels 1 am Deckelteil 2 befestigt und somit zusammen mit diesem ihrerseits in bzw. gegen Pfeilrichtung 8, d.h. in Fahrzeuglängsrichtung 3 verschiebbar sind. Wie ersichtlich sind beim hier gezeigten Ausführungsbeispiel die drei übereinander liegenden Führungsschienen 7a, 7b, 7c für die drei (ebenfalls übereinander liegenden) Schiebehimmel-Teile 1a, 1b, 1c zu einem sog. Führungsschienen-Block 7 zusammengefaßt, der jeweils linksseitig sowie rechtsseitig des Fahrzeuges mittels mehrerer Schraubverbindungen **10** am Deckelteil 2 bzw. an einem Flansch 2a desselben befestigt ist. Die genaue Ausbildung des Deckelteiles 2 bzw. dessen Flansches 2a braucht hier nicht näher erläutert zu werden; wesentlich ist lediglich die starre Anbindung der Führungsschienen 7a, 7b, 7c an das Deckelteil 2. Ferner erkennt man in **Figur 4** noch eine unterhalb des Führungsschienen-Blockes 7 vorgesehene und somit dem Fahrzeuginnenraum zugewandte, in geeigneter Weise am Deckelteil 2 befestigte Unterblende 2c, die u.a. die Schraubverbindungen **10** abdeckt.

Indem die Führungsschienen 7a, 7b, 7c am Deckelteil 2 befestigt sind, müssen sich diese Führungsschienen 7a - 7c lediglich über die (in Fahrzeuglängsrichtung 3 gemessene) Länge dieses Deckelteiles 2 erstrecken, um unterschiedlichste Positionen des mehrteiligen Schiebehimmels 1, d.h. der einzelnen Schiebehimmel-Teile 1a - 1c, zu ermöglichen. Anders als im bekannten Stand der Technik ist es hierbei nicht erforderlich, die Führungsschienen 7a - 7c zusätzlich im wesentlichen über die gesamte Länge des möglichen Verschiebeweges des Deckelteiles 2 (bei der Darstellung nach **Figur 1** somit nach hinten verlängert) auszubilden, um das Deckelteil 2 (durch ein teleskopartiges Übereinanderschieben der Schiebehimmel-Teile 1a - 1c) wie in **Figur 3** dargestellt entweder im wesentlichen freizulegen oder wie in **Figur 1** dargestellt vollständig abzudecken. Daß hierdurch ein reduzierter Bauraumbedarf besteht, liegt auf der Hand. Ferner ergeben sich durch diese Konstruktion, d.h. durch die Befestigung der Führungsschienen 7a - 7c am Deckelteil 2 im Hinblick auf die Montage des Schiebedachsystemes geringere Toleranzanforderungen bezüglich der Einbaumaße.

Im folgenden wird nun die mögliche Verschiebebewegung der Schiebehimmel-Teile 1a - 1c zunächst bei geschlossenem Deckelteil 2 anhand der **Figuren 1 - 3** erläutert:
Wie ersichtlich liegen die drei Führungsschienen 7a, 7b, 7c für die drei Schiebehimmel-Teile 1a - 1c übereinander und erstrecken sich in dieser Weise bevorzugt über die gesamte Länge des Deckelteiles 2, so daß es möglich ist, die einzelnen Schiebehimmel-Teile 1a, 1b, 1c unter anderem wie in den **Figuren 1, 2, 3** dargestellt unterschiedlich zu positionieren. Es ist somit möglich, die (hier drei) Schiebehimmel-Teile 1a, 1b, 1c teleskopartig in Fahrzeuglängsrichtung 3 übereinander zu schieben, so wie dies in **Figur 3** dargestellt ist. Aufgrund der Dreiteiligkeit des dem Deckelteil 2 zugeordneten und diesem demzufolge in der Größe angepaßten Schiebehimmels 1 sind in diesem Zustand nach **Figur 3** somit im wesentlichen die vorderen beiden Drittel der Oberfläche des Deckelteiles 2 freigelegt.

Um in diesen Zustand nach **Figur 3** zu gelangen, wird ausgehend vom Zustand nach **Figur 1**, in welchem das Deckelteil 2 bzw. die Oberfläche desselben von den Schiebehimmel-Teilen 1a - 1c vollständig abgedeckt ist, zunächst das obere Schiebehimmel-Teil 1a gemäß Pfeilrichtung 8 soweit nach hinten geschoben, bis eine nicht dargestellte Mitnahmevorrichtung des Schiebehimmel-Teiles 1a mit einer ebenfalls nicht dargestellten Mitnahmevorrichtung des darunterliegenden Schiebehimmel-Teiles 1b auf Anschlag geht.
Wie bereits mehrfach erwähnt sind nämlich die einzelnen Schiebehimmel-Teile 1a, 1b, 1c in teleskopartiger Weise übereinander verschiebbar, was implizit beinhaltet, daß jeweils zwischen zwei übereinander liegenden Schiebehimmel-Teilen 1a, 1b, bzw. 1b, 1c wie bei teleskopartigen Schiebeverbindungen üblich in deren stets übereinanderliegenden Endbereichen gegenseitige Mitnahmevorrichtungen bzw. Endanschläge vorgesehen sind, die hier der Einfachheit halber generell nicht dargestellt sind.

Nachdem nun die beiden Mitnahmevorrichtungen der Schiebehimmel-Teile 1a, 1b miteinander in Kontakt sind, wird bei einer weiteren Verschiebebewegung des oberen Schiebehimmel-Teiles 1a gemäß Pfeilrichtung 8 zusätzlich das mittlere Schiebehimmel-Teil 1b im gleichen Bewegungssinne mitgenommen, so daß schließlich der Zustand nach **Figur 2** erreicht wird. Nach weiterem Verschieben der beiden Schiebehimmel-Teile 1a, 1b gemäß Pfeilrichtung 8 gelangen diese schließlich in die Position nach **Figur 3**, in welcher die drei Schiebehimmel-Teile 1a - 1c teleskopartig zusammengeschoben im wesentlichen übereinanderliegen. Im übrigen ist im Bereich der Vorderkante 11a des oberen Schiebehimmel-Teiles 1a eine Griffmulde 12a vorgesehen, an welcher ein Fahrzeug-Insasse angreifen kann, um die beschriebene Verschiebebewegung manuell durchzuführen. In entsprechender Weise erfolgt auch ein Schließvorgang des Schiebehimmels 1 ausgehend vom Zustand nach **Figur 3** zum Zustand nach **Figur 1**.
Dabei wird, wie insbesondere die **Figuren 2, 3** zeigen, das untere Schiebehimmel-Teil 1c, welches gleichzeitig das am weitesten hinten liegende ist, von einer am bereits erwähnten Fahrzeug-Anschlußteil 6 vorgesehenen Haltevorrichtung 9, die später noch näher erläutert wird, festgehalten. Mit dieser Haltevorrichtung 9 wirkt dabei ein an der Hinterkante des Schiebehimmel-Teiles 1c vorgesehener Endanschlag 11c derart zusammen, daß dieses Schiebehimmel-Teil 1c nicht gegen Pfeilrichtung 8 nach vorne geschoben werden kann.

Bei einem Schließvorgang des Schiebehimmels 1 wird somit ausgehend von **Figur 3** zunächst das obere Schiebehimmel-Teil 1a gegen Pfeilrichtung 8 nach vorne geschoben, bis wieder eine hier nicht gezeigte, bei Teleskop-Schiebeführungen übliche und dabei als Endanschlag wirkende Mitnahmevorrichtung mit einer entsprechenden Mitnahmevorrichtung am mittleren Schiebehimmel-Teil 1b zum Anschlag kommt, so daß mit einer weiteren Verschiebung des Schiebehimmel-Teiles 1a gegen Pfeilrichtung 8 dann das Schiebehimmel-Teil 1b mitgenommen wird. Schließlich wird wieder der Ausgangszustand nach **Figur 1** erreicht, in welchem das obere Schiebehimmel-Teil 1a mit seiner Vorderkante 11a an einer entsprechend geformten Vorderblende 2b des Deckelteiles 2 anstößt.

Eine Funktion der bereits erwähnten Haltevorrichtung 9 ist es, auch bei einem Öffnen des Deckelteiles 2 für eine definierte Position des Schiebehimmels 1 bzw. der Schiebehimmel-Teile 1a - 1c zu sorgen. Dabei ist der Zustand bei vollständig geöffnetem Deckelteil 2 in **Figur 5** dargestellt. Wird beispielsweise ausgehend von der Position nach **Figur 1** das Deckelteil 2 gemäß Pfeilrichtung 8 in seine Offenposition nach **Figur 5** gefahren, so werden letztendlich die Schiebehimmel-Teile 1a - 1c wie dargestellt teleskopartig übereinander geschoben, da zunächst bis zum Zurücklegen von in etwa einem Drittel der Wegstrecke des Deckelteiles 2 alle Schiebehimmel-Teile 1a - 1c entsprechend der Position von **Figur 1** mitgenommen werden, da dann aber ein an der Vorderkante des unteren Schiebehimmel-Teiles vorgesehener Endanschlag 12c an der Haltevorrichtung 9 anschlägt. Bei einer weiteren Verschiebebewegung des Deckelteiles 2 nach hinten wird das untere Schiebehimmel-Teil 1c somit von der Haltevorrichtung 9 festgehalten, so daß sich im weiteren das mittlere Schiebehimmel-Teil 1b über das untere Schiebehimmel-Teil 1c schiebt. Im weiteren Bewegungsablauf geht auch das mittlere Schiebehimmel-Teil 1b auf Anschlag, so daß sich letztendlich das obere Schiebehimmel-Teil 1a über das mittlere Schiebehimmel-Teil 1b und das untere Schiebehimmel-Teil 1c schiebt, bis der in **Figur 5** dargestellte Zustand erreicht ist.

Beim hier erläuterten bevorzugten Ausführungsbeispiel der Erfindung ist weiterhin vorgesehen, daß die Schiebehimmel-Teile 1a, 1b, 1c quer zur Fahrzeuglängsrichtung 3 gewölbt und unter Vorspannung stehend in deren sich in Fahrzeuglängsrichtung 3 erstreckenden Mittenbereich aufeinander aufliegen, was hier nicht figürlich dargestellt ist. Diese Ausgestaltung bewirkt, daß die einzelnen Schiebehimmel-Teile 1a - 1c insbesondere in der im wesentlichen übereinanderliegenden Position nach den **Figuren 3, 5** quasi reibschlüssig in dieser Position gehalten werden, wenn nicht geeignete Fremdkrafteinflüsse auf eines (insbesondere auf das obere Teil 1a oder auf das untere Teil 1c) der Schiebehimmel-Teile 1a - 1c einwirken.

Konkret hat diese beschriebene Vorspannung und das damit zusammenhängende Aufeinanderliegen der Schiebehimmel-Teile 1a - 1c in deren Mittenbereich somit zur Folge, daß bei einer Schließbewegung des Deckelteiles 2 ausgehend von der Position nach **Figur 5** die Schiebehimmel-Teile 1a - 1c im übereinanderliegenden Zustand verbleiben. Wird somit das Deckelteil 2 ausgehend von **Figur 5** gegen Pfeilrichtung 8 nach vorne verfahren und geschlossen, so wird letztendlich der in **Figur 3** dargestellte Zustand erreicht. Ein derartiger Bewegungsablauf wird üblicherweise von den Fahrzeuginsassen gewünscht, d.h. bei einem Schließen des Schiebedachsystemes möchte man zunächst nur das Deckelteil 2 geschlossen haben. Ist ferner zusätzlich ein Schließen des Schiebehimmels 1 gewünscht, so muß dies daraufhin manuell geschehen, so wie bereits weiter oben im Zusammenhang mit der Überführung vom Zustand nach **Figur 3** in denjenigen nach **Figur 1** beschrieben.

Beim hier erläuterten bevorzugten Ausführungsbeispiel der Erfindung ist es auch möglich, das bereits erwähnte (und die besagte Haltevorrichtung 9 tragende) Fahrzeug-Anschlußteil 6 seinerseits in Fahrzeuglängsrichtung 3 zu verschieben. Dies geht aus der im folgenden erläuterten **Figur 6** hervor. Hier befindet sich das Deckelteil 2 in der in den **Figuren 1 - 3** dargestellten Position, während das (ebenfalls in geeigneten seitlichen, figürlich nicht dargestellten Führungsschienen in der Fahrzeugkarosserie geführte) Fahrzeug-Anschlußteil 6 unter dieses Deckelteil 2 geschoben ist. Neben der vorderen, die Haltevorrichtung 9 tragenden Abschlußblende 6a des Fahrzeug-Anschlußteiles 6 erkennt man in **Figur 6** ferner dessen hintere Abschlußblende 6b.

Wie ersichtlich bewirkt die Haltevorrichtung 9 im Zusammenwirken mit dem vorderen Endanschlag 12c des unteren Schiebehimmel-Teiles 1c, daß bei einer derartigen Verschiebebewegung des Fahrzeug-Anschlußteiles 6 gegen Pfeilrichtung 8 nach vorne die Schiebehimmel-Teile 1a - 1c gleichzeitig in ihre teleskopartig übereinander geschobene Position gebracht werden.

Beim hier erläuterten bevorzugten Ausführungsbeispiel der Erfindung ist es weiterhin auch möglich, die beschriebenen Funktionen der Haltevorrichtung 9 außer Kraft zu setzen, so wie dies in **Figur 1** dargestellt ist. In dieser **Figur 1** ist die Haltevorrichtung 9 in ihren beiden möglichen Positionen dargestellt. In der in durchgezogenen Linien dargestellten Position wirkt diese Haltevorrichtung 9 wie oben beschrieben, d.h. sie wirkt in der beschriebenen Weise mit den Endanschlägen 11c oder 12c zusammen. In der gestrichelt dargestellten Position hingegen ist die Haltevorrichtung 9 außer Kraft gesetzt. Dann wird bei beliebigen Verschiebebewegungen des Deckelteiles 2 und/oder des Fahrzeug-Anschlußteiles 6 die jeweilige Position des Schiebehimmels 1 bzw. der einzelnen Schiebehimmel-Teile 1a - 1c nicht verändert, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

Zusammenfassend zeichnet sich ein erfindungsgemäßes Schiebedachsystem somit durch eine einfache Gleitmechanik aus, die besonders bauraumoptimiert und insbesondere nicht mit ortsfesten Teilen gekoppelt ist. Dies macht eine Toleranzabstimmung zu stationären Bauelementen überflüssig, wodurch sich ein geringer Montage- und Demontageaufwand ergibt. Dabei kann der Schiebehimmel 1 selbst aufgrund der beschriebenen Vorspannung und der damit verbundenen gegenseitigen Abstützung der einzelnen Schiebehimmel-Teile 1a - 1c in deren Mittenbereich relativ labil und somit mit geringer Steifigkeit (und daher auch kostengünstig) ausgeführt sein.

### Bezugszeichenliste:

- 1: Schiebehimmel
- 1a: oberes Schiebehimmel-Teil
- 1b: mittleres Schiebehimmel-Teil
- 1c: unteres Schiebehimmel-Teil
- 2: Deckelteil
- 2a: Flansch von 2
- 2b: Vorderblende von 2
- 2c: Unterblende von 2
- 3: Fahrzeuglängsrichtung
- 4: vorderer Dachrahmen
- 5: Dachausschnitt (Figuren 1, 5)
- 6: Fahrzeug-Anschlußteil
- 6a: vordere Abschlußblende von 6
- 6b: hintere Abschlußblende von 6
- 7: Führungsschienen-Block
- 7a: Führungsschiene (für 1a)
- 7b: Führungsschiene (für 1b)
- 7c: Führungsschiene (für 1c)
- 8: Pfeilrichtung
- 9: Haltevorrichtung
- 10: Schraubverbindung
- 11a: Vorderkante von 1a
- 11c: Endanschlag an Hinterkante von 1 c
- 12a: Griffmulde an 1a
- 12c: Endanschlag an Vorderkante von 1c

## Patentansprüche

1. Mehrteiliger Schiebehimmel (1) für ein Schiebedachsystem eines Fahrzeuges, insbesondere eines Personenkraftwagens (PKW's), mit zumindest einem in Fahrzeuglängsrichtung (3) verschiebbaren Deckelteil (2) sowie mit zumindest zwei teleskopartig übereinander verschiebbaren, unterhalb des Deckelteiles (2) in seitlichen Führungsschienen (7a, 7b, 7c) geführten Schiebehimmel-Teilen (1a, 1b, 1c), dadurch gekennzeichnet, daß die den Schiebehimmel-Teilen (1a, 1b, 1c) zugeordneten Führungsschienen (7a, 7b, 7c) am Deckelteil (2) befestigt und zusammen mit diesem verschiebbar sind.

2. Mehrteiliger Schiebehimmel nach Anspruch 1,
dadurch gekennzeichnet, daß jedem Schiebehimmel-Teil (1a, 1b, 1c) eigene Führungsschienen (7a, 7b, 7c) zugeordnet sind, die linksseitig sowie rechtsseitig des Fahrzeuges jeweils zu einem am Deckelteil (2) befestigten Führungsschienen-Block (7) zusammengefasst sind.

3. Mehrteiliger Schiebehimmel nach Anspruch 1 oder 2,
dadurch gekennzeichnet, daß die Schiebehimmel-Teile (1a, 1b, 1c) quer zur Fahrzeuglängsrichtung (3) gewölbt und unter Vorspannung stehend in deren sich in Fahrzeuglängsrichtung (3) erstreckenden Mittenbereich aufeinander aufliegen.

4. Mehrteiliger Schiebehimmel nach einem der vorangegangenen Ansprüche,
dadurch gekennzeichnet, daß zumindest drei übereinanderliegend angeordnete und teleskopartig übereinander verschiebbare Schiebehimmel-Teile (1a, 1b, 1c) vorgesehen sind.

5. Mehrteiliger Schiebehimmel nach einem der vorangegangenen Ansprüche,
dadurch gekennzeichnet, daß jeweils zwischen zwei übereinander liegenden Schiebehimmel-Teilen (1a, 1b, 1c) wie bei teleskopartigen Schiebeverbindungen üblich in deren stets übereinanderliegenden Endbereichen gegenseitige Mitnahmevorrichtungen und/oder Endanschläge vorgesehen sind.

6. Mehrteiliger Schiebehimmel nach einem der vorangegangenen Ansprüche in Verbindung mit einem ein derartiges Schiebedachsystem aufweisenden Fahrzeug,
dadurch gekennzeichnet, daß im Vorderkantenbereich eines sich zumindest im geschlossenen Zustandes des Deckelteiles (2) in Fahrzeuglängsrichtung (3) betrachtet hinter diesem befindenen Fahrzeug-Anschlußteiles (6) eine lösbare Haltevorrichtung (9) für das auf die Fahrtrichtung bezogen hintere Schiebehimmel-Teil (1c) vorgesehen ist.

7. Mehrteiliger Schiebehimmel nach Anspruch 6,
dadurch gekennzeichnet, daß das sich hinter dem Deckelteil (2) befindende Fahrzeug-Anschlußteil (6) seinerseits in Fahrzeuglängsrichtung (3) verschiebbar ist.
